# EUROPÄISCHE PATENTSCHRIFT

(11) **EP 3 527 727 B1**
(45) Veröffentlichungstag und Bekanntmachung des Hinweises auf die Patenterteilung: **30.03.2022**
(21) Anmeldenummer: 18156794.2
(22) Anmeldetag: 14.02.2018
(51) Int. Cl.: E03B 7/08, E04H 4/12, F16L 27/107

(54) **FLUIDÜBERFÜHRUNGSVORRICHTUNG ZUM ÜBERFÜHREN EINER SPÜLLÖSUNG AUS EINER ROHRLEITUNG**
FLUID TRANSFER DEVICE FOR TRANSFERRING A FLUSHING SOLUTION FROM A CONDUIT
DISPOSITIF DE TRANSFERT DE FLUIDE DESTINÉ À TRANSFÉRER UNE SOLUTION DE RINÇAGE D'UNE CONDUITE

(43) Veröffentlichungstag der Anmeldung: 21.08.2019
(73) Patentinhaber: A.P.F. Aqua System AG, 42117 Wuppertal (DE)
(72) Erfinder: UHLMANN, Helmut, 42285 Wuppertal (DE); MATSCHULAT, Arndt, 42119 Wupperthal (DE)
(74) Vertreter: Bird & Bird LLP

(56) Entgegenhaltungen:
- EP-A1- 2 674 657
- EP-A1- 2 724 737
- DE-A1- 10 061 425
- DE-A1-102013 000 024
- DE-A1-102014 113 914
- DE-A1-102016 103 675
- DE-U- 1 926 529

## Beschreibung

Die Erfindung betrifft eine Fluidüberführungsvorrichtung zum Überführen einer Spüllösung aus einer Rohrleitung in eine Abflusseinrichtung. Die Erfindung wird im Zusammenhang mit dem Spülen einer Trinkwasseranlage beschrieben und kann vorteilhaft auch mit anderen Rohrleitungen, welche ein beliebiges Fluid führen, verwendet werden.

Es ist bekannt, eine Trinkwasseranlage, welche eine Rohrleitung und wenigstens eine Zapfstelle zum Abgeben von Wasser bzw. Trinkwasser aufweist, mit einer chemischen und/oder biologischen Lösung (Spüllösung) zu spülen (Reinigung), insbesondere um einer mikrobiellen Kontamination der Trinkwasseranlage zu begegnen. Obwohl zahlreiche Spüllösungen über einen vorhandenen Abfluss ins Abwassersystem entsorgt werden können, kann ein unkontrolliertes Austreten der Spüllösung in die Umgebung unerwünscht sein.

Aus der DE 10 2016 103 675 A1 ist eine Spülvorrichtung bekannt, die zum Aufnehmen einer Spüllösung aus wenigstens einer Rohrleitung ausgestaltet ist. Die Spülvorrichtung weist ein Grundelement mit einem Innenraum zum Aufnehmen der Spüllösung auf, eine Wandung zur Begrenzung eines Innenraums gegenüber der Umgebung, sowie ein für die Spüllösung durchlässiges Leitungsanschlusselement. Das Leitungsanschlusselement ist in der Wandung angeordnet und zum Verbinden mit einer die Spüllösung führenden Zuleitung ausgestaltet. Zwischen einem Kernelement, das in die Zuleitung einsetzbar ist, und einem Rohrstutzen des Leitungsanschlusselements kann die Zuleitung geklemmt werden.

### Aufgabenstellung und Lösung

Es ist eine Aufgabe der Erfindung, ein Überführen einer Spüllösung aus einer Rohrleitung in eine Abflusseinrichtung zu vereinfachen bzw. den apparativen Aufwand zu verringern.

Die Aufgabe wird entsprechend einem ersten Aspekt der Erfindung durch eine Fluidüberführungsvorrichtung zum Überführen einer Spüllösung aus einer Rohrleitung in eine Abflusseinrichtung gelöst. Weiter wird die Aufgabe durch ein Verfahren zum Betreiben der Fluidüberführungsvorrichtung (zweiter Aspekt) und eine Verwendung der Fluidüberführungsvorrichtung (dritter Aspekt) gelöst. Bevorzugte Weiterbildungen bilden den jeweiligen Gegenstand der abhängigen Ansprüche.

Die erfindungsgemäße Fluidüberführungsvorrichtung zum Überführen einer Spüllösung aus einer Rohrleitung in eine Abflusseinrichtung mit einer für die Spüllösung durchlässigen Abflussöffnung und einer fluidundurchlässigen Umfangsfläche, welche die Abflussöffnung umgibt, weist ein rohrförmiges Kernelement mit einem ersten Elementende, das in die Abflusseinrichtung einsetzbar ist, und mit einem zweiten Elementende auf. Weiter weist die Fluidüberführungsvorrichtung einen Folienschlauch mit einem ersten Schlauchende, das mit der Rohrleitung fluidleitend verbindbar ist, und mit einem zweiten Schlauchende, welches das zweite Elementende aufnimmt, auf. Die Fluidüberführungsvorrichtung weist ferner ein Dichtelement am ersten Elementende des Kernelements auf, wobei das Dichtelement zum Abdichten des ersten Elementendes in der Abflussöffnung ausgestaltet ist. Das erste Elementende und das zweite Schlauchende sind derart ausgestaltet, dass das zweite Schlauchende zwischen der Umfangsfläche der Abflusseinrichtung und dem ersten Elementende geklemmt werden kann.

Mit der Fluidüberführungsvorrichtung des ersten Aspekts ist es möglich, den apparativen Aufwand zum Überführen von Spüllösung aus einer Rohrleitung in eine Abflusseinrichtung zu verringern. Zudem kann einem Austreten eines insbesondere gasförmigen Teils der Spüllösung gesundheitlichen Schäden des Benutzers oder Dritter und/oder dem Bilden von Flecken durch Bleichen durch die Spüllösung begegnet werden. Wenn sich in der Rohrleitung unabsichtlich oder zur Steigerung der Reinigungsleistung absichtlich Luft befindet, dann kann sich diese Luft beim Austritt aus der Zapfstelle entspannen und zu Spritzern führen. Mit der Fluidüberführungsvorrichtung kann diesen Spritzern vorteilhaft begegnet werden.

Die erfindungsgemäße Fluidüberführungsvorrichtung kann mit verschiedenen Spüllösungen betrieben werden. Vorzugsweise erfolgt die Verwendung der Fluidüberführungsvorrichtung jedoch mit einer Chlordioxidlösung. Wässrige Chlordioxidlösungen (ClO2) finden aufgrund der hohen Oxidationskraft des Chlordioxids Verwendung, beispielsweise zum Desinfizieren und zum Desodorieren, insbesondere in der Wasseraufbereitungstechnik.

Das Verfahren gemäß dem zweiten Aspekt dient dem Spülen einer Rohrleitung und kann mit einer Fluidüberführungsvorrichtung entsprechend dem ersten Aspekt durchgeführt werden. Das Verfahren weist die folgenden Schritte auf:
- S1: Verbinden, vorzugsweise fluidleitend, des zweiten Elementendes mit dem zweiten Schlauchende, vorzugsweise Einsetzen des zweiten Elementendes in das zweite Schlauchende,
- S2: Einsetzen des ersten Elementendes in die unabhängige Abflusseinrichtung, insbesondere gemeinsam mit dem zweiten Schlauchende insbesondere derart, dass das zweite Schlauchende zwischen der Abflusseinrichtung und dem ersten Elementende angeordnet ist,
- S₃: fluidleitendes Verbinden des ersten Schlauchendes mit der unabhängigen Rohrleitung,
- S₄: Überführen der Spüllösung aus der Rohrleitung in die Abflusseinrichtung.

Mit dem Verfahren entsprechend dem zweiten Aspekt kann der Aufwand zum Überführen von Spüllösung aus einer Rohrleitung in eine Abflusseinrichtung verringert werden. Mit dem Verfahren kann einem Austreten eines gasförmigen Teils, von möglicherweise gesundheitsgefährdenden Gasen aus der Spüllösung und/oder dem Bilden von Flecken durch Bleichen durch die Spüllösung begegnet werden. Dies ist insbesondere bei der Verwendung einer Chlordioxidlösung als Spüllösung vorteilhaft.

Ganz allgemein wird das erfindungsgemäße Verfahren zum Spülen einer Rohrleitung durchgeführt, indem zunächst ein Spülmittel der Rohrleitung zugeführt wird. Das Spülmittel kann in Abhängigkeit von der konkreten Anwendung jedes geeignete Spülmittel sein. Der Fachmann wird das passende Spülmittel für den jeweiligen Einsatzzweck in geeigneter Weise auswählen.

Das Spülmittel wird idealerweise möglichst am Anfang des zu reinigenden Rohrsystems zugeführt. Dies kann batchweise oder kontinuierlich erfolgen. Soll beispielsweise die Rohrleitung eines Privathaushaltes gereinigt werden, so wird das Spülmittel vorteilhaft direkt nach der städtischen Wasseruhr zugeführt. Durch Vermischen des Spülmittels mit dem durch die Rohrleitung geführten Wasser ergibt sich die Spüllösung. Aufgrund dieser Verdünnung ist die Konzentration des aktiven Inhaltsstoffes in dem Spülmittel selbst naturgemäß höher als in der Spüllösung. Durch Wahl der Konzentration des aktiven Inhaltsstoffes in dem Spülmittel, der Menge oder des Volumenstroms des eingesetzten Spülmittels und des Volumenstroms des Wassers, zu dem das Spülmittel gegeben wird, lässt sich die anfängliche Konzentration des aktiven Inhaltsstoffes in der Spüllösung einstellen. Während des Durchlaufens der Spüllösung durch die Rohrleitung und der damit verbundenen Reinigung, Desinfektion, Desodorierung oder Entfernung von Biofilmen, Legionellen und anderen Keimen innerhalb der Rohrleitung wird der aktive Inhaltsstoff sukzessive verbraucht und seine Konzentration in der Spüllösung verringert sich.

Ist die Reinigung, Desinfektion, Desodorierung oder Entfernung von Biofilmen, Legionellen und anderen Keimen in der Rohrleitung abgeschlossen, findet im Wesentlichen kein weiterer Verbrauch an aktiven Inhaltsstoff mehr statt. Im Fall einer kontinuierlichen Zugabe des Spülmittels verringert sich dann auch die Konzentration des aktiven Inhaltsstoffes während des Durchlaufs durch die Rohrleitung nicht mehr signifikant. Erfindungsgemäß kann somit durch Vergleich der Anfangskonzentration des aktiven Inhaltsstoffes in der Spüllösung (beispielsweise direkt nach Zugabe des Spülmittels und Vermischens mit dem durch die Rohrleitung geführten Wasser über eine definierte Mischstrecke) mit der Konzentration des aktiven Inhaltsstoffes nach Austritt aus der Rohrleitung festgestellt werden, wann die Reinigung, Desinfektion, Desodorierung oder Entfernung von Biofilmen, Legionellen und anderen Keimen in der Rohrleitung abgeschlossen ist und das Spülen beendet werden kann.

Damit beim Austritt der - häufig gesundheitsschädlichen und/oder chemisch aggressiven - Spüllösung aus dem Rohrsystem ein Kontakt mit der Umgebung vermieden werden kann, wird die erfindungsgemäße Fluidüberführungsvorrichtung vorgeschlagen. Diese wird zwischen der Zapfstelle (beispielsweise ein Wasserhahn eines Waschbeckens), an dem die Spüllösung austritt, und dem Abfluss (beispielsweise der Abfluss eines Waschbeckens) derart angeordnet, dass die Spüllösung nicht mit der Umgebung in Kontakt kommt. Um diesen Kontakt der Spüllösung mit der Umgebung vorzugsweise vollständig zu vermeiden, sind idealerweise alle Zapfstellen des zu reinigenden Rohrsystems mit der Fluidüberführungsvorrichtung zu versehen.

Entsprechend dem dritten Aspekt wird die Fluidüberführungsvorrichtung des ersten Aspekts zum Überführen einer Spüllösung aus einer unabhängigen Rohrleitung in eine unabhängige Abflusseinrichtung verwendet. So kann der Aufwand zum Überführen von Spüllösung aus einer Rohrleitung in eine Abflusseinrichtung verringert werden. Ferner kann einem Austreten eines gasförmigen Teils, von möglicherweise gesundheitsgefährdenden Gasen aus der Spüllösung und/oder dem Bilden von Flecken durch Bleichen durch die Spüllösung begegnet werden. Dies ist insbesondere bei der Verwendung einer Chlordioxidlösung als Spüllösung vorteilhaft.

### Bevorzugte Weiterbildungen

Sofern nicht ausdrücklich ausgeschlossen, sind mehrere der nachfolgenden bevorzugten Weiterbildungen bzw. Ausführungsformen der Erfindung gemeinsam mit der Fluidüberführungsvorrichtung entsprechend dem ersten Aspekt oder mit dem Verfahren entsprechend dem zweiten Aspekt kombinierbar.

Die erfindungsgemäßen Abflusseinrichtungen weisen eine für die Spüllösung durchlässige Abflussöffnung und eine fluidundurchlässige Umfangsfläche, welche die Abflussöffnung umgibt, auf. Entsprechend einer Weiterbildung der Fluidüberführungsvorrichtung ist das erste Elementende ausgestaltet, das zweite Schlauchende an die Umfangsfläche umlaufend anzulegen. Für einfacheres Abdichten kann das zweite Schlauchende zwischen der Umfangsfläche und dem ersten Elementende geklemmt werden. Damit kann einem unerwünschten Austreten von Spüllösung oder gasförmigen Anteilen der Spüllösung vorteilhaft begegnet werden.

Die Fluidüberführungsvorrichtung weist weiter ein Dichtelement am ersten Elementende des Kernelements auf, wobei das Dichtelement zum Abdichten des ersten Elementendes in der Abflussöffnung ausgestaltet ist. Das Dichtelement kann ringförmig um das erste Elementende ausgebildet und/oder benachbart zum ersten Elementende an einer Außenfläche des Kernelements angeordnet sein. Das Dichtelement kann benachbart zum ersten Elementende einen Abschnitt des Kernelements bilden. Das Dichtelement kann mit einem Elastomer ausgebildet sein, das vorzugsweise stoffschlüssig mit der Außenfläche des Kernelements verbunden ist. Vorzugsweise sind sowohl das Dichtelement als auch das Kernelement mit Elastomer ausgebildet. Das Dichtelement kann ausgestaltet sein, infolge elastischer Verformung eine Rückstellkraft auf die Abflusseinrichtung, deren Umfangsfläche und/oder den Folienschlauch auszuüben. Das Dichtelement kann ausgestaltet sein, an der Abflusseinrichtung, an deren Umfangsfläche oder am Folienschlauch anzuliegen. Benachbart zum ersten Elementende kann die Wandstärke des Kernelements gegenüber dem übrigen Kernelement dicker sein, insbesondere für eine zum Abdichten der Fluidüberführungsvorrichtung gegenüber der Umgebung ausreichende Rückstellkraft. Damit kann einem unerwünschten Austreten von Spüllösung oder gasförmigen Anteilen der Spüllösung vorteilhaft begegnet werden.

Bei einer weiteren bevorzugten Ausführungsform der Fluidüberführungsvorrichtung ist dessen Kernelement rotationssymmetrisch oder konisch oder zylindrisch geformt. Das Kernelement kann eine Wandung aufweisen, welche einen Kanal des Kernelements, der die unabhängige Spüllösung führen kann, rohrförmig begrenzt. Benachbart zum ersten Elementende kann ein umlaufender Bund angeordnet sein, welcher das Abdichten in der Abflusseinrichtung unterstützen kann. Mit den genannten Gestaltungen können die Herstellkosten für das Kernelement vorteilhaft verringert werden.

Entsprechend einer anderen Weiterbildung der Fluidüberführungsvorrichtung weist der Folienschlauch eine Probeentnahmeeinrichtung zum Entnehmen einer Probe der Spüllösung auf. Durch die insbesondere verschließbare Probeentnahmeeinrichtung kann Spüllösung aus dem Innenraum des Folienschlauchs entnommen werden. Ein Röhrchen der Probeentnahmeeinrichtung für Spüllösung kann sich durch den Folienschlauch in die Umgebung erstrecken und/oder kann wiederverschließbar sein. Das Röhrchen kann ein Ventil aufweisen, welches den Innenraum des Folienschlauchs gegenüber der Umgebung abdichtet. Über das Röhrchen kann wenigstens eine Dichtscheibe gesteckt werden, die gegen den Folienschlauch gedrängt werden kann, um die Probeentnahmeeinrichtung bzw. den Folienschlauch gegenüber der Umgebung abzudichten. Vorzugsweise ist die Probeentnahmeeinrichtung zum Entnehmen von Spüllösung mit einem Entnahmemittel, einer Entnahmeeinrichtung oder einer Einwegspritze verbindbar. Vorteilhaft kann Spüllösung dem Folienschlauch durch die Probeentnahmeeinrichtung entnommen werden, um anschließend die Bestandteile bzw. Zusammensetzung der Spüllösung zu untersuchen.

Eine bevorzugte Probeentnahmeeinrichtung weist ein Röhrchen mit einem Außengewinde auf. Das Röhrchen kann ein Ventil aufweisen, welches den Innenraum des Folienschlauchs gegenüber der Umgebung abdichtet, oder kann mit einem Stopfen verschlossen werden. Zwischen zwei Dichtscheiben der Probeentnahmeeinrichtung, die über das Röhrchen gesteckt sind, kann der Folienschlauch angeordnet werden, der dazu ein Loch aufweist. Eine der Dichtscheiben kann durch eine Stützscheibe gestützt werden. Mit einer Mutter der Probeentnahmeeinrichtung, die auf ein Außengewindes des Röhrchens geschraubt werden kann, können die Dichtscheiben zueinander gedrängt werden. Die derart ausgestaltete Probeentnahmeeinrichtung ist vorteilhaft unabhängig vom Folienschlauch und kann wiederverwendet werden.

Bei einer anderen bevorzugten Ausführungsform der Fluidüberführungsvorrichtung erstreckt das zweite Schlauchende sich über das zweite Elementende hinaus wenigstens bis zum ersten Elementende, wenn das Kernelement vom zweiten Schlauchende aufgenommen ist. Bei dieser Ausführungsform kann das Kernelement das zweite Schlauchende gegen die Abflusseinrichtung drängen bzw. an die Abflusseinrichtung anlegen. Damit kann vorteilhaft die Abdichtung der Fluidüberführungsvorrichtung gegenüber der Umgebung verbessert sein.

Bei einer Weiterbildung des Verfahrens des zweiten Aspekts (Betriebsverfahren) erfolgt das fluidleitende Verbinden des ersten Schlauchendes mit der Rohrleitung durch Stülpen des ersten Schlauchendes über ein Ende der unabhängigen Rohrleitung. Damit kann ein Abdichten der Fluidüberführungsvorrichtung gegenüber der Umgebung vereinfacht sein.

Entsprechend einer anderen Weiterbildung des Betriebsverfahrens erfolgt das Einsetzen des ersten Elementendes in die Abflusseinrichtung derart, dass das erste Elementende gemeinsam mit dem zweiten Schlauchende in die Abflusseinrichtung gesteckt wird, sodass das zweite Schlauchende zwischen der Abflusseinrichtung und dem ersten Elementende angeordnet ist. Damit kann das Abdichten der Fluidüberführungsvorrichtung gegenüber der Umgebung vereinfacht sein.

Eine bevorzugte Ausrührungsform des Betriebsverfahrens weist auch den folgenden Schritt auf:
- S₅: Umschlingen des ersten Schlauchendes mit einem Schlingmittel derart, dass das erste Schlauchende an dem Ende der Rohrleitung anliegt.

Als Schlingmittel kann ein Kabelbinder dienen, der um das erste Schlauchende gezogen werden kann. Damit kann das Abdichten der Fluidüberführungsvorrichtung gegenüber der Umgebung verbessert sein.

Bei einer anderen Weiterbildung weist das Betriebsverfahren zudem die folgenden Schritte auf:
- S6: Quetschen des Folienschlauchs unterhalb der Probeentnahmeeinrichtung, damit die Spüllösung sich innerhalb des Folienschlauchs ansammelt,
- S₇: Entnehmen von Spüllösung durch die Probeentnahmeeinrichtung, insbesondere mit einem Entnahmemittel.

Als Entnahmemittel kann eine Einwegspritze dienen. Schritt S7 kann vorteilhaft während des Spülens erfolgen. Vorzugsweise wird Schritt S7 erst durchgeführt, wenn sich im gequetschten Folienschlauch so viel Spüllösung angesammelt hat, dass deren Spiegel bis zur Probeentnahmeeinrichtung reicht. Anschließend kann die Spüllösung untersucht werden.

Vorzugsweise kann bei dieser Weiterbildung des Betriebsverfahrens auch der folgende Schritt durchgeführt werden:
- S8: Verbinden, insbesondere fluidleitend, eines Entnahmemittels mit der Probeentnahmeeinrichtung, insbesondere vor Schritt S₇.
Insbesondere wenn als Entnahmemittel eine Einwegspritze dient, ermöglicht diese Weiterbildung ein bequemes Entnehmen von Spüllösung. Auch kann einem unerwünschten Austreten von Spüllösung in die Umgebung begegnet werden.

Entsprechend einer Weiterbildung der Verwendung des dritten Aspekts erfolgt das Überführen der Spüllösung in die unabhängige Abflusseinrichtung direkt bzw. ohne eine Spülvorrichtung zwischen der Fluidüberführungsvorrichtung bzw. deren Kernelement und der Abflusseinrichtung. Dadurch kann der apparative Aufwand zum Überführen der Spüllösung in die unabhängige Abflusseinrichtung verringert werden.

### Ausführungsbeispiele

Weitere Vorteile, Merkmale und Ausgestaltungen der vorliegenden Erfindung können den Ausführungsbeispielen entnommen werden. Es zeigen:
- Figur 1: teilweise schematisch und perspektivisch ein Ausführungsbeispiel der Fluidüberführungsvorrichtung,
- Figur 2: teilweise schematisch und perspektivisch ein anderes Ausführungsbeispiel der Fluidüberführungsvorrichtung mit Probeentnahmeinrichtung,
- Figur 3: teilweise schematisch und perspektivisch eine beispielhafte Probeentnahmeinrichtung, die mit dem Folienschlauch des Ausführungsbeispiels der Figur 2 kombiniert werden könnte,
- Figur 4: teilweise schematisch einen Schnitt durch ein beispielhaftes Kernelement mit Dichtelement.

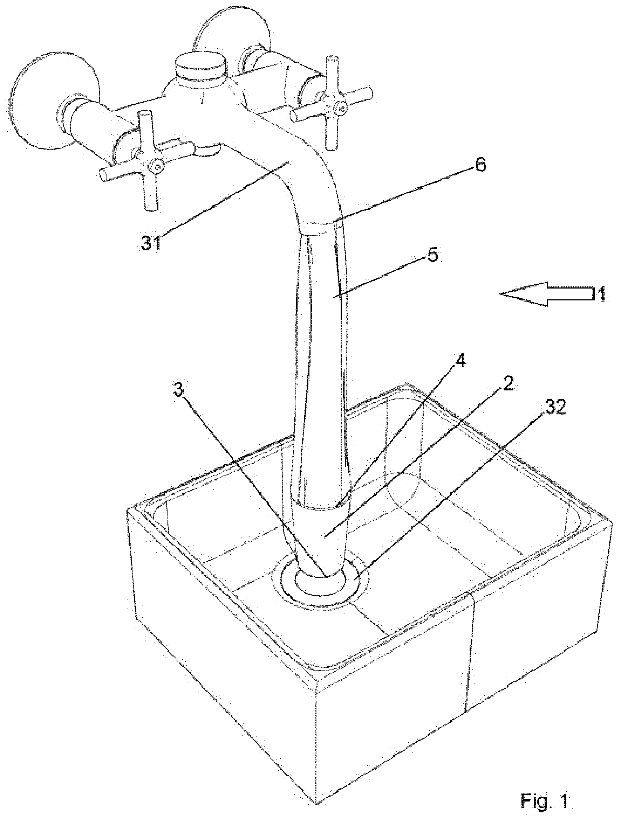

Figur 1 zeigt teilweise schematisch und perspektivisch ein Ausführungsbeispiel der Fluidüberführungs¬vorrichtung 1. Im gezeigten Zustand wird die Fluidüberführungs¬vorrichtung zum Überführen von Spüllösung aus einer Rohrleitung 31 in eine Abflusseinrichtung 32 vorbereitet. Die Abflusseinrichtung kann Teil eines Waschbeckens sein. Das zweite Schlauchende 7 ist für besseres Erkennen des konischen Kernelements 2 nicht dargestellt. Das Kernelement kann vom zweiten Schlauchende aufgenommen sein. Das zweite Schlauchende kann bis zum ersten Elementende 3 oder darüber hinaus reichen. Die Länge des Folienschlauchs 5 ist an den Abstand zwischen der Rohrleitung und der Abflusseinrichtung angepasst. Das Kernelement ist so bemessen, dass dessen erstes Elementende 3 formschlüssig in die Abflusseinrichtung eingesetzt werden kann. Das Kernelement kann ein Dichtelement für besseres Abdichten aufweisen.

Das Kernelement 2 ist benachbart zur Abflusseinrichtung angeordnet, aber noch nicht in die Abflusseinrichtung eingesetzt, d.h. Schritt S2 ist noch nicht ausgeführt. Das Kernelement ist mit dem Folienschlauch 5 fluidleitend verbunden. Der Folienschlauch bzw. dessen erstes Schlauchende 6 ist bereits mit der Rohrleitung fluidleitend verbunden. Wenn das Kernelement, ggf. gemeinsam mit dem zweiten Schlauchende, in die Abflusseinrichtung gesteckt wird, dann kann Spüllösung aus der Rohrleitung in die Abflusseinrichtung überführt werden. Dabei kann einem unerwünschten Austreten von Spüllösung in die Umgebung begegnet werden.

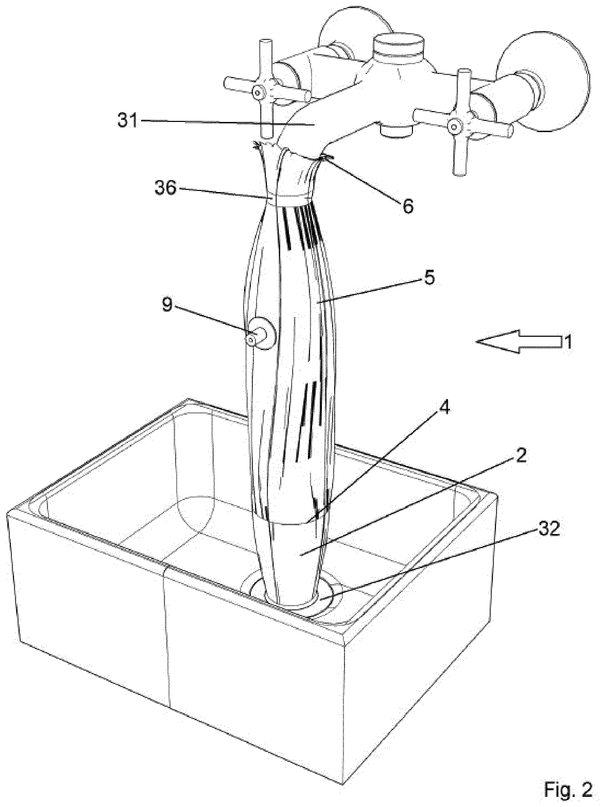

Figur 2 zeigt teilweise schematisch und perspektivisch ein anderes Ausführungsbeispiel der Fluidüberführungs¬vorrichtung 1 mit Probeentnahmeeinrichtung 9.

Abweichend von Figur 1 sind das erste Elementende des Kernelements 2 und das zweite Schlauchende bereits in die Abflusseinrichtung 32 eingesetzt bzw. gesteckt, d.h. Schritt S2 ist ausgeführt. Das erste Elementende 4 des Kernelements ist durch den Folienschlauch 5 sichtbar. Das zweite Schlauchende reicht bis über das erste Elementende hinaus. Das erste Schlauchende 6 ist über die Rohrleitung 31 gestülpt. Ein Schlingmittel 36 ist um das erste Schlauchende und die Rohrleitung gezogen. Weiter weist die Fluidüberführungs¬vorrichtung eine Probeentnahmeeinrichtung 9 auf, welche sich durch die Wandung des Folienschlauchs 5 erstreckt.

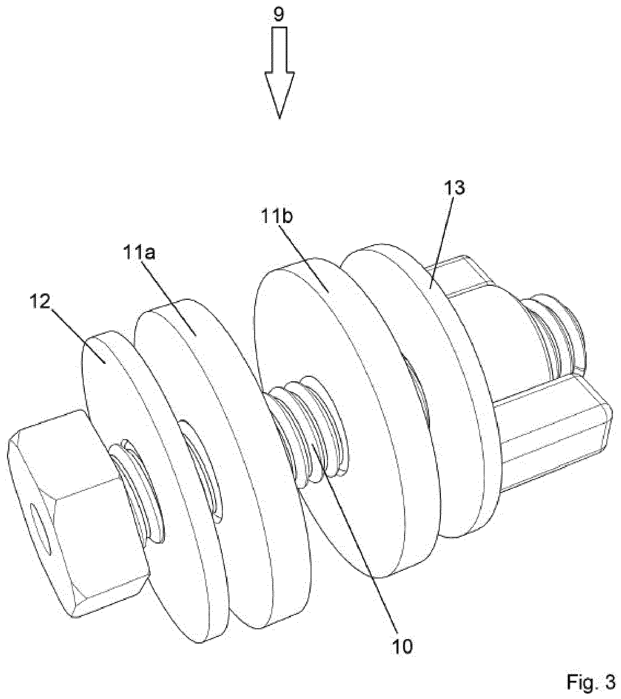

Figur 3 zeigt teilweise schematisch und perspektivisch eine beispielhafte Probeentnahmeeinrichtung 9, die mit dem Folienschlauch des Ausführungsbeispiels der Figur 2 kombiniert werden könnte. Die Probeentnahmeeinrichtung weist ein Röhrchen 10 mit einem Außengewinde auf. Das Röhrchen kann ein Ventil aufweisen, welches den Innenraum des Folienschlauchs gegenüber der Umgebung abdichtet. Zwischen zwei Dichtscheiben 11a, 11b, die über das Röhrchen gesteckt sind, kann der Folienschlauch angeordnet werden, der dazu ein Loch aufweist. Eine der Dichtscheiben 11a kann durch eine Stützscheibe 12 gestützt werden. Mit einer Mutter 13 der Probeentnahmeeinrichtung können die Dichtscheiben 11a, 11b zueinander gedrängt werden. Die derart ausgestaltete Probeentnahmeeinrichtung ist vorteilhaft unabhängig vom Folienschlauch und kann wiederverwendet werden.

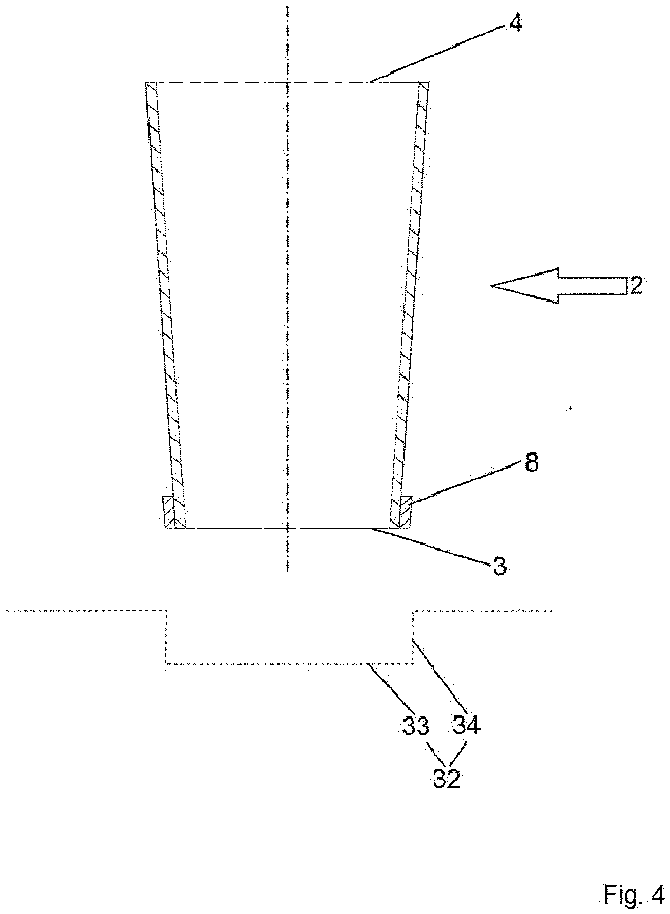

Figur 4 zeigt teilweise schematisch einen Schnitt durch ein beispielhaftes Kernelement 2 mit Dichtelement 8. Das Kernelement hat eine konische Form und eine Wandung begrenzt einen Innenraum, der zum Führen der Spüllösung dient. Das Dichtelement ist benachbart zum ersten Elementende 3 angeordnet und umgibt die untere Öffnung des Kernelements. Für besseres Erkennen ist das Dichtelement dicker dargestellt, als für dessen Funktion erforderlich ist.

Unterhalb des Dichtelements ist gestrichelt die Abflusseinrichtung 32 gezeigt, in welches das Kernelement einsetzbar ist. Die Abflussöffnung 33 ist von einer Umfangsfläche 34 umgeben bzw. berandet. Das Kernelement bzw. dessen erstes Elementende ist ausgestaltet, an der Umfangsfläche 34 abschnittsweise anzuliegen. Für einfacheres Abdichten kann das zweite Schlauchende zwischen der Umfangsfläche und dem ersten Elementende geklemmt sein.

### Bezugszeichenliste

- 1: Fluidüberführungsvorrichtung
- 2: Kernelement
- 3: erstes Elementende des Kernelements
- 4: zweites Elementende des Kernelements
- 5: Folienschlauch
- 6: erstes Schlauchende des Folienschlauchs
- 7: zweites Schlauchende des Folienschlauchs
- 8: Dichtelement des Kernelements
- 9: Probeentnahmeeinrichtung
- 10: Röhrchen der Probeentnahmeeinrichtung
- 11, 11a, 11b: Dichtscheibe der Probeentnahmeeinrichtung
- 12: Stützscheibe der Probeentnahmeeinrichtung
- 13: Mutter der Probeentnahmeeinrichtung
- 31: Rohrleitung
- 32: Abflusseinrichtung
- 33: Abflussöffnung der Abflusseinrichtung
- 34: Umfangsfläche der Abflusseinrichtung
- 35: Entnahmemittel
- 36: Schlingmittel

## Patentansprüche

1. Fluidüberführungsvorrichtung (1) zum Überführen einer Spüllösung aus einer Rohrleitung (31) in eine Abflusseinrichtung (32) mit einer für die Spüllösung durchlässigen Abflussöffnung (33) und einer fluidundurchlässigen Umfangsfläche (34), welche die Abflussöffnung umgibt, wobei die Fluidüberführungsvorrichtung aufweist:
ein rohrförmiges Kernelement (2) mit einem ersten Elementende (3), wobei das erste Elementende in die Abflusseinrichtung einsetzbar ist, und einem zweiten Elementende (4), und
einen Folienschlauch (5) mit einem ersten Schlauchende (6), wobei das erste Schlauchende mit der Rohrleitung fluidleitend verbindbar ist, und mit einem zweiten Schlauchende (7), welches das zweite Elementende aufnimmt,
ein Dichtelement (8) am ersten Elementende des Kernelements, wobei das Dichtelement zum Abdichten des ersten Elementendes in der Abflussöffnung ausgestaltet ist,
wobei das erste Elementende (3) und das zweite Schlauchende (7) derart ausgestaltet sind, dass das zweite Schlauchende zwischen der Umfangsfläche (34) der Abflusseinrichtung (32) und dem ersten Elementende (3) geklemmt werden kann.

2. Fluidüberführungsvorrichtung (1) nach Anspruch 1, wobei das Kernelement (2) rotationssymmetrisch oder konisch oder zylindrisch geformt ist.

3. Fluidüberführungsvorrichtung (1) nach einem der vorherigen Ansprüche, wobei der Folienschlauch eine Probeentnahmeeinrichtung (9) zum Entnehmen einer Probe der Spüllösung aufweist.

4. Fluidüberführungsvorrichtung (1) nach Anspruch 3, wobei die Probeentnahmeeinrichtung mit einem Entnahmemittel (35) verbindbar ist.

5. Fluidüberführungsvorrichtung (1) nach einem der vorherigen Ansprüche, wobei das zweite Schlauchende sich über das zweite Elementende hinaus bis zum ersten Elementende erstreckt, insbesondere wenn das Kernelement (2) im zweiten Schlauchende aufgenommen ist.

6. Verfahren zum Betreiben einer Fluidüberführungsvorrichtung (1) nach einem der vorherigen Ansprüche, mit den Schritten
S1 Verbinden, gegebenenfalls fluidleitend, des zweiten Elementendes (4) mit dem zweiten Schlauchende (7), vorzugsweise Einsetzen des zweiten Elementendes in das zweite Schlauchende,
S2 Einsetzen des ersten Elementendes (3) in die Abflusseinrichtung, insbesondere gemeinsam mit dem zweiten Schlauchende insbesondere derart, dass das zweite Schlauchende zwischen der Abflusseinrichtung (32) und dem ersten Elementende angeordnet ist,
S₃ fluidleitendes Verbinden des ersten Schlauchendes (6) mit der Rohrleitung (31),
S₄ Überführen der Spüllösung aus der Rohrleitung in die Abflusseinrichtung.

7. Verfahren nach Anspruch 6, wobei das fluidleitende Verbinden des ersten Schlauchendes mit der Rohrleitung durch Stülpen des ersten Schlauchendes über ein Ende der Rohrleitung erfolgt.

8. Verfahren nach Anspruch 6 oder 7, wobei das Einsetzen des ersten Elementendes in die Abflusseinrichtung derart erfolgt, dass das erste Elementende gemeinsam mit dem zweiten Schlauchende in die Abflusseinrichtung gesteckt wird, sodass das zweite Schlauchende zwischen der Abflusseinrichtung und dem ersten Elementende angeordnet ist.

9. Verfahren nach einem der Ansprüche 6 bis 8, aufweisend den folgenden Schritt:
S5 Umschlingen des ersten Schlauchendes mit einem Schlingmittel (36) derart, dass das erste Schlauchende an dem Ende der Rohrleitung anliegt.

10. Verfahren nach einem der Ansprüche 6 bis 9 mit einer Fluidüberführungsvorrichtung (1) entsprechend Anspruch 3, mit den Schritten
S6 Quetschen des Folienschlauchs unterhalb der Probeentnahmeeinrichtung, damit die Spüllösung sich innerhalb des Folienschlauchs ansammelt,
S₇ Entnehmen von Spüllösung durch die Probeentnahmeeinrichtung, insbesondere mit einem Entnahmemittel.

11. Verfahren nach Anspruch 10, wobei vor Schritt S7 ein Entnahmemittel mit der Probeentnahmeeinrichtung fluidleitend verbunden wird (Schritt S8).

12. Verwendung einer Fluidüberführungsvorrichtung (1) nach einem der Ansprüche 1 bis 5 zum Überführen einer Spüllösung aus einer Rohrleitung in eine Abflusseinrichtung.

13. Verwendung einer Fluidüberführungsvorrichtung (1) nach Anspruch 12, wobei das Überführen der Spüllösung in die Abflusseinrichtung direkt bzw. ohne eine Spülvorrichtung zwischen dem Kernelement und der Abflusseinrichtung erfolgt.

## Claims

1. Fluid transfer apparatus (1) for the transfer of a flushing solution from a pipeline (31) into a drainage device (32) with a drainage opening (33) which is permeable for the flushing solution, and with a fluid-impermeable circumferential face (34) which surrounds the drainage opening, the fluid transfer apparatus comprising:
a tubular core element (2) with a first element end (3), it being possible for the first element end to be inserted into the drainage device, and with a second element end (4), and
a film tube (5) with a first tube end (6), it being possible for the first tube end to be connected in a fluid-conducting manner to the pipeline, and with a second tube end (7) which receives the second element end (4),
a sealing element (8) at the first element end of the core element, the sealing element being configured to seal the first element end in the drainage opening,
the first element end (3) and the second tube end (7) being configured such that the second tube end can be clamped between the circumferential face (34) of the drainage device (32) and the first element end (3).

2. Fluid transfer apparatus (1) according to Claim 1, the core element (2) being formed in a rotationally symmetrical or conical or cylindrical manner.

3. Fluid transfer apparatus (1) according to one of the preceding claims, the film tube having a sample removal device (9) for the removal of a sample of the flushing solution.

4. Fluid transfer apparatus (1) according to Claim 3, it being possible for the sample removal device to be connected to a removal means (35).

5. Fluid transfer apparatus (1) according to one of the preceding claims, the second tube end extending beyond the second element end as far as the first element end, in particular when the core element (2) is received in the second tube end.

6. Method for operating a fluid transfer apparatus (1) according to one of the preceding claims, with the steps:
S1 connecting, possibly in a fluid-conducting manner, of the second element end (4) to the second tube end (7), preferably inserting of the second element end into the second tube end,
S2 inserting the first element end (3) into the drainage device, in particular together with the second tube end, in particular such that the second tube end is arranged between the drainage device (32) and the first element end,
S3 connecting the first tube end (6) to the pipeline (31) in a fluid-conducting manner,
S4 transferring of the flushing solution from the pipeline into the drainage device.

7. Method according to Claim 6, the fluid-conducting connection of the first tube end to the pipeline taking place by way of the first tube end being pushed over one end of the pipeline.

8. Method according to Claim 6 or 7, wherein inserting of the first element end into the drainage device taking place such that the first element end is inserted together with the second tube end into the drainage device, with the result that the second tube end is arranged between the drainage device and the first element end.

9. Method according to one of Claims 6 to 8, having the following step:
S5 wrapping around of the first tube end with a wraparound means (36) such that the first tube end bears against the end of the pipeline.

10. Method according to one of Claims 6 to 9 with a fluid transfer apparatus (1) in accordance with Claim 3, with the steps:
S6 squeezing of the film tube below the sample removal device, in order that the flushing solution collects within the film tube,
S7 removal of flushing solution by way of the sample removal device, in particular using a removal means.

11. Method according to Claim 10, a removing means being connected in a fluid-conducting manner to the sample removal device (step S8) before step S7.

12. Use of a fluid transfer apparatus (1) according to one of Claims 1 to 5 for the transfer of a flushing solution from a pipeline into a drainage device.

13. Use of a fluid transfer apparatus (1) according to Claim 12, the transfer of the flushing solution into the drainage device taking place directly and/or without a flushing apparatus between the core element and the drainage device.

## Revendications

1. Dispositif de transfert de fluide (1) destiné à transférer une solution de rinçage à partir d'une conduite tubulaire (31) dans un dispositif d'évacuation (32) doté d'une ouverture d'évacuation (33) perméable à la solution de rinçage et d'une surface périphérique (34) imperméable aux fluides, laquelle entoure l'ouverture d'évacuation, le dispositif de transfert de fluide comprenant :
un élément central (2) tubulaire doté d'une première extrémité d'élément (3), la première extrémité d'élément pouvant être insérée dans le dispositif d'évacuation, et d'une deuxième extrémité d'élément (4), et
un film tubulaire (5) doté d'une première extrémité de tube (6), la première extrémité de tube pouvant être reliée de manière fluidique à la conduite tubulaire, et d'une deuxième extrémité de tube (7), laquelle reçoit la deuxième extrémité d'élément,
un élément d'étanchéité (8) à la première extrémité de l'élément central, l'élément d'étanchéité étant configuré pour étanchéifier la première extrémité d'élément dans l'ouverture d'évacuation,
la première extrémité d'élément (3) et la deuxième extrémité de tube (7) étant configurées de telle sorte que la deuxième extrémité de tube puisse être serrée entre la surface périphérique (34) du dispositif d'évacuation (32) et la première extrémité d'élément (3).

2. Dispositif de transfert de fluide (1) selon la revendication 1, l'élément central (2) étant formé de manière à présenter une symétrie de révolution ou de manière conique ou de manière cylindrique.

3. Dispositif de transfert de fluide (1) selon l'une des revendications précédentes, le film tubulaire comprenant un dispositif de prélèvement d'échantillon (9) servant au prélèvement d'un échantillon de la solution de rinçage.

4. Dispositif de transfert de fluide (1) selon la revendication 3, le dispositif de prélèvement d'échantillon pouvant être relié à un moyen de prélèvement (35).

5. Dispositif de transfert de fluide (1) selon l'une des revendications précédentes, la deuxième extrémité de tube s'étendant au-delà de la deuxième extrémité d'élément jusqu'à la première extrémité d'élément, en particulier lorsque l'élément central (2) est reçu dans la deuxième extrémité de tube.

6. Procédé de fonctionnement d'un dispositif de transfert de fluide (1) selon l'une des revendications précédentes, comportant les étapes de
S1 liaison, éventuellement fluidique, de la deuxième extrémité d'élément (4) à la deuxième extrémité de tube (7), de préférence insertion de la deuxième extrémité d'élément dans la deuxième extrémité de tube,
S2 insertion de la première extrémité d'élément (3) dans le dispositif d'évacuation, en particulier conjointement avec la deuxième extrémité de tube en particulier de telle sorte que la deuxième extrémité de tube soit disposée entre le dispositif d'évacuation (32) et la première extrémité d'élément,
S3 liaison fluidique de la première extrémité de tube (6) à la conduite tubulaire (31),
S4 transfert de la solution de rinçage à partir de la conduite tubulaire dans le dispositif d'évacuation.

7. Procédé selon la revendication 6, la liaison fluidique de la première extrémité de tube à la conduite tubulaire s'effectuant par enfoncement de la première extrémité de tube par-dessus une extrémité de la conduite tubulaire.

8. Procédé selon la revendication 6 ou 7, l'insertion de la première extrémité d'élément dans le dispositif d'évacuation s'effectuant de telle sorte que la première extrémité d'élément soit insérée conjointement avec la deuxième extrémité de tube dans le dispositif d'évacuation, de sorte que la deuxième extrémité de tube soit disposée entre le dispositif d'évacuation et la première extrémité d'élément.

9. Procédé selon l'une des revendications 6 à 8, comprenant l'étape suivante :
S5 enroulement de la première extrémité de tube à l'aide d'un moyen d'enroulement (36) de telle sorte que la première extrémité de tube s'appuie contre l'extrémité de la conduite tubulaire.

10. Procédé selon l'une des revendications 6 à 9 avec un dispositif de transfert de fluide (1) conformément à la revendication 3, comportant les étapes de
S6 écrasement du film tubulaire en dessous du dispositif de prélèvement d'échantillon, afin que la solution de rinçage s'accumule à l'intérieur du film tubulaire,
S7 prélèvement de solution de rinçage au moyen du dispositif de prélèvement d'échantillon, en particulier à l'aide d'un moyen de prélèvement.

11. Procédé selon la revendication 10, un moyen de prélèvement étant relié de manière fluidique (étape S8) au dispositif de prélèvement d'échantillon avant l'étape S7.

12. Utilisation d'un dispositif de transfert de fluide (1) selon l'une des revendications 1 à 5 pour le transfert d'une solution de rinçage à partir d'une conduite tubulaire dans un dispositif d'évacuation.

13. Utilisation d'un dispositif de transfert de fluide (1) selon la revendication 12, le transfert de la solution de rinçage dans le dispositif d'évacuation s'effectuant directement ou sans dispositif de rinçage entre l'élément central et le dispositif d'évacuation.
